# EUROPEAN PATENT APPLICATION

(11) **EP 2 386 344 A2**
(43) Date of publication of application: **16.11.2011**
(21) Application number: 11165078.4
(22) Date of filing: 06.05.2011
(51) Int. Cl.: B01D 46/42, B01D 46/00, F02C 7/052, F02C 7/05

(54) **Seal for gas turbine filter**

(30) Priority: 12.05.2010 US 778982
(71) Applicant: General Electric Company, Schenectady, NY 12345 (US)
(72) Inventor: Drobniak, David Joseph, Houston, TX 77015 (US)
(74) Representative: Gray, Thomas

(57) **Abstract**

A turbine filter seal assembly (11) may include a first mounting flange (32) with a channel (50) extending about a first air opening (150), a seal (30) with an enlarged portion (84) compressed into the channel (50), and a second mounting flange (34) with a protrusion (52) extending about a second air opening (152). The first and second mounting flanges (32, 34) are configured to couple to one another about the seal (30), and the protrusion (52) is configured to bias the seal (30).

## Description

### BACKGROUND OF THE INVENTION

The subject matter disclosed herein relates to gas turbines, and more specifically, to an air filter seal in a turbine generator.

Gas turbines generators are often used to produce electricity for a power grid. The gas turbine generators are typically stationary units disposed in a power plant, such as an integrated gasification combined cycle (IGCC) power plant. However, the gas turbine generators also may be used in mobile units, such as large trailers. These mobile gas turbine generators are useful for locations subject to a natural disaster, a brownout, a blackout, or other power outages. Setup and maintenance of these mobile gas turbine generators includes installation of large air filters, which can weigh over 20,000 to 30,000 lbs. Unfortunately, the installation of these large air filters can be difficult and time consuming, thereby creating significant delays in the operation of the mobile gas turbine generators.

### BRIEF DESCRIPTION OF THE INVENTION

Certain embodiments commensurate in scope with the originally claimed invention are summarized below. These embodiments are not intended to limit the scope of the claimed invention, but rather these embodiments are intended only to provide a brief summary of possible forms of the invention. Indeed, the invention may encompass a variety of forms that may be similar to or different from the embodiments set forth below.

In a first embodiment, a system includes a mobile power unit, comprising a gas turbine engine, an air intake duct that routes air into the gas turbine engine, a filter housing that holds an air filter, wherein the filter housing is coupled to the air intake duct, a seal assembly disposed between the gas turbine intake and the filter, wherein the seal assembly comprises, a seal coupled to the air intake duct or the filter housing, and a filter alignment guide configured to align the seal between the air intake duct and the filter housing.

In a second embodiment, a system includes a turbine filter seal assembly, comprising, a first mounting flange comprises a channel extending about a first air opening, a seal comprising an enlarged portion compressed into the channel, and a second mounting flange comprising a protrusion extending about a second air opening, wherein the first and second mounting flanges are configured to couple to one another about the seal, and the protrusion is configured to bias the seal.

In a third embodiment, a system includes a turbine filter seal assembly, comprising, a first mounting flange comprising a first cooling air opening, a first combustion air opening, and a first alignment guide, a second mounting flange comprising a second cooling air opening, a second combustion air opening, and a second alignment guide, and a seal disposed between the first and second mounting flanges, wherein the first and second alignment guides mate with one another to align the seal between the first and second mounting flanges.

### BRIEF DESCRIPTION OF THE DRAWINGS

These and other features, aspects, and advantages of the present invention will become better understood when the following detailed description is read with reference to the accompanying drawings in which like characters represent like parts throughout the drawings, wherein:
FIG. 1 is a schematic side view of an embodiment of a mobile gas turbine generator having a filter gasket with self-retention and self-alignment features;
FIG. 2 is a partial schematic side view of an embodiment of a filter housing exploded from a gas turbine intake of the generator of FIG. 1, taken within dashed line 2-2, illustrating the filter gasket in a self-retained position;
FIG. 3 is a cross-sectional view of an embodiment of the filter gasket exploded from a first mounting flange of the filter housing of FIG. 2;
FIG. 4 is a cross-sectional view of an embodiment of the first mounting flange of the filter housing exploded from a second mounting flange of the gas turbine intake of FIG. 2, taken within dashed line 4-4, illustrating the filter gasket self-retained in the first mounting flange;
FIG. 5 is a cross-sectional view of an embodiment of the filter gasket of FIG. 2 partially compressed between the first and second mounting flanges;
FIG. 6 is a cross-sectional view of an embodiment of the filter gasket of FIG. 2 completely compressed between the first and second mounting flanges;
FIG. 7 is a partial perspective view of an embodiment of the gas turbine intake of

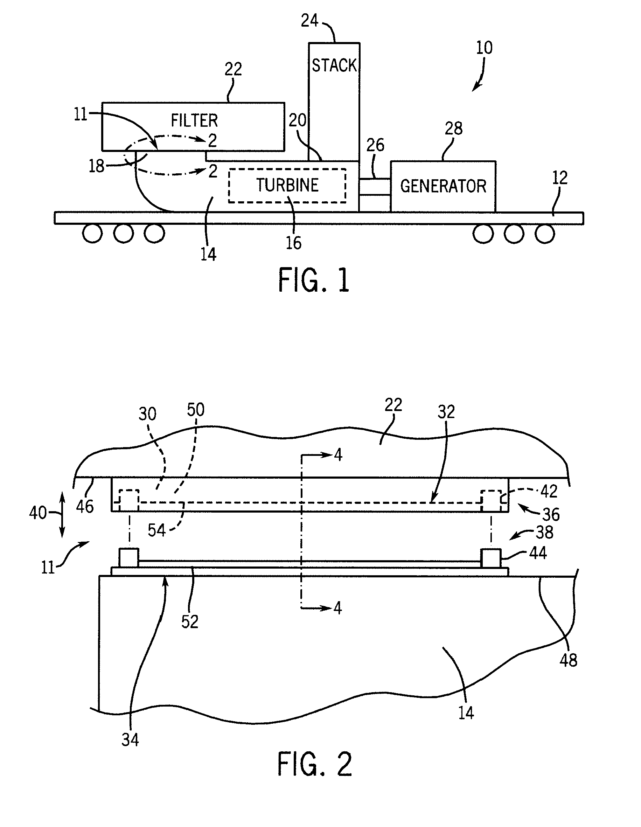

FIGS. 1 and 2, illustrating the first mounting flange exploded from the second mounting flange;

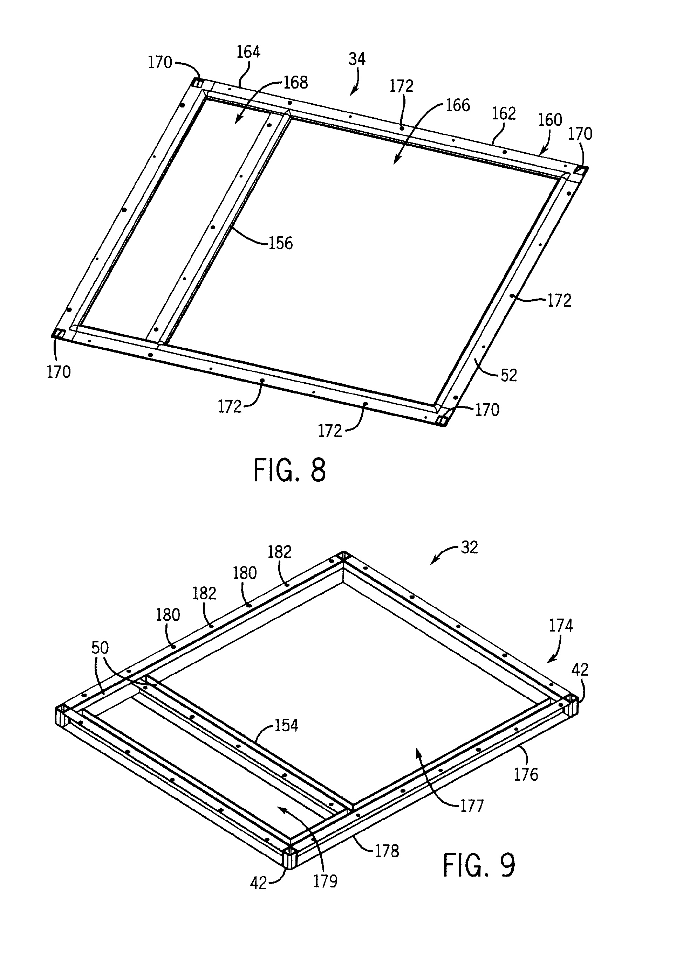

FIG. 8 is a perspective view of the second mounting flange; and
FIG. 9 is a perspective view of the first mounting flange.

### DETAILED DESCRIPTION OF THE INVENTION

One or more specific embodiments of the present invention will be described below. In an effort to provide a concise description of these embodiments, not all features of an actual implementation may be described in the specification. It should be appreciated that in the development of any such actual implementation, as in any engineering or design project, numerous implementation-specific decisions must be made to achieve the developers' specific goals, such as compliance with system-related and business-related constraints, which may vary from one implementation to another. Moreover, it should be appreciated that such a development effort might be complex and time consuming, but would nevertheless be a routine undertaking of design, fabrication, and manufacture for those of ordinary skill having the benefit of this disclosure.

When introducing elements of various embodiments of the present invention, the articles "a," "an," "the," and "said" are intended to mean that there are one or more of the elements. The terms "comprising," "including," and "having" are intended to be inclusive and mean that there may be additional elements other than the listed elements.

The present disclosure is directed to a reusable seal system between an air filter housing and a gas turbine housing. As discussed in detail below, embodiments of the reusable seal system include a filter gasket with self-retention and self-alignment features to simplify installation of the air filter housing on the gas turbine housing. For example, the filter gasket may have a non-flat geometry that fits between, and creates an intermediate seal with, first and second mounting flanges. In certain embodiments, the filter gasket includes a protruding portion disposed within a groove along the first mounting flange, and a recessed portion that mates with a rail along the second mounting flange. For example, the protruding portion of the filter gasket may be self-retained and self-sealed within the groove of the first mounting flange, e.g., by an interference fit and/or a compression fit. Furthermore, the rail may extend into the recessed portion of the filter gasket to cause a tighter fit of the protruding portion in the groove, while also creating a tighter seal between the filter gasket and the second mounting flange. The first and second mounting flanges also may include alignment features to simplify the installation of the air filter housing with the gas turbine housing. For example, the first mounting flange may include a plurality of alignment openings, which mate with a plurality of alignment posts on the second mounting flange. The foregoing features of the filter gasket, first mounting flange, and second mounting flange are discussed in detail below.

FIG. 1 is a schematic side view of an embodiment of a gas turbine power generation unit 10 having a seal system 11 with self-retention and self-alignment features. The seal system 11, as embodied by the inventor, has applicability for any gas turbine, including a mobile gas turbine power generation unit. As a mobile generation unit is merely exemplary, it is not intended to limit the invention in any manner. The seal system 11, as embodied by the inventor, has applicability for any power generator, includes a mobile. The power generation unit 10 includes a trailer 12, a gas turbine housing 14 that houses a gas turbine 16 on the trailer 12, and an electrical generator 28 driven by the gas turbine 16 on the trailer 12. The gas turbine housing 14 defines an intake port 18 and an exit port 20. The intake port 18 is coupled to an air filter housing 22 upstream from the gas turbine 16. In certain embodiments, the intake port 18 may include a plurality of independent air intakes ports, e.g., a first air intake port directed into the gas turbine 16 and a second air intake port directed into the housing 14 surrounding the gas turbine 16. In other words, the first air intake port may direct air into a compressor of the gas turbine 16, whereas the second air intake port may direct air into the housing 14 for cooling of the gas turbine 16. The exit port 20 is coupled to an exhaust stack 24 for venting exhaust gases from the gas turbine 16. The gas turbine 16 includes a drive shaft 26 that extends through the housing 14 and couples to the generator 28.

The mobile gas turbine power generation unit 10 may be used in locations subject to natural disasters, brownouts, blackouts, or other power outages. As a result, it is desirable to provide rapid setup of the power generation unit 10 to alleviate the electricity shortages in these locations. Typically, the installation of the air filter housing 22 on the gas turbine housing 14 is slow and complicated by the weight of the air filter housing 22 (e.g., up to approximately 20,000 or 30,000 lbs), the large number of connections, and the difficulty in aligning the filter gasket. As discussed below, embodiments of the reusable seal system 11 (e.g., a filter gasket and mating mounting flanges) drastically simplify the installation process by providing self-retention and alignment features for the filter gasket. For example, the filter gasket may be self-retained and self-sealed to a first mounting flange, thereby also providing self-alignment to the first mounting flange. In turn, the first mounting flange may be quickly aligned and secured to a second mounting flange via mating alignment features between the first and second flanges.

FIG. 2 is a partial schematic side view of an embodiment of the filter housing 22 exploded from the intake port 18, of FIG. 1, of the gas turbine housing 14 of the power generation unit 10 of FIG. 1, taken within dashed line 2-2, illustrating details of the reusable seal system 11. In the illustrated embodiment, the reusable seal system 11 includes a filter gasket 30, a first mounting flange 32, and a second mounting flange 34, wherein the filter gasket 30 creates an airtight seal between the first and second mounting flanges 32 and 34. As discussed in detail below, the filter gasket 30 may be self-retained to one of the mounting flanges 32 and 34, which may include alignment features 36 and 38 to simplify attachment of the air filter housing 22 to the gas turbine housing 14. The illustrated filter gasket 30 is self-retained, e.g., interference fit or compressively fit, to the first mounting flange 32. For example, the filter gasket 30 may be compressively fit within a recess or groove in the first mounting flange 32. Alternatively, the filter gasket 30 may be molded about, or configured to capture, a protruding portion of the first mounting flange 32. In the illustrated embodiment, the first mounting flange 32 is coupled to the air filter housing 22 and the second mounting flange 34 is coupled to the gas turbine housing 14, although a reverse configuration may be used in other embodiments. In this manner, the filter gasket 30 remains self-aligned and moves with the first mounting flange 32 during installation and removal of the air filter housing 22 relative to the gas turbine housing 14.

In turn, the self-alignment features 36 and 38 facilitate alignment between the first and second mounting flanges 32 and 34. For example, the self-alignment features 36 and 38 may include any suitable mating features, such as male and female structures, which restrict movement to a single direction 40 perpendicular to a plane of the filter gasket 30 and mounting flanges 32 and 34. In the illustrated embodiment, the self-alignment features 36 on the first mounting flange 32 include a plurality of alignment openings 42, while the self-alignment features 38 on the second mounting flange 34 include a plurality of alignment pins 44. The alignment openings 42 and the corresponding alignment pins 44 may be any suitable shape, such as a cylindrical, rectangular, or triangular. In certain embodiments, the configuration may be reversed with the self-alignment features 36 on the first mounting flange 32 having the plurality of alignment pins 44, and the self-alignment features 38 on the second mounting flange 34 having the plurality of alignment openings 42. As illustrated, the alignment openings 42 are disposed at opposite corners (e.g., 2 or 4 corners) and extend in the direction 40 into the first mounting flange 32, while the alignment pins 44 are disposed at opposite corners (e.g., 2 or 4 corners) and protrude in the direction 40 from the second mounting flange 34. However, the alignment openings 42 and the alignment pins 44 may be disposed any number of intermediate or peripheral locations on the mounting flanges 32 and 34, or directly on the housings 22 and 14.

In the illustrated embodiment, the mounting flanges 32 and 34 are independent from the respective housings 22 and 14, but are coupled to the housing 22 and 14 via suitable fasteners. For example, the mounting flange 32 may be coupled to a bottom surface 46 of the air filter housing 22 via a welded interface, a brazed interface, a plurality of bolts, a plurality of clamps, or another suitable fastener. Likewise, the mounting flange 34 may be coupled to a top surface 48 of the gas turbine housing 14 via a welded interface, a brazed interface, a plurality of bolts, a plurality of clamps, or another suitable fastener. In certain embodiments, the mounting flanges 32 and 34 may be integrally formed with the respective housings 22 and 14, and thus may not be independent components. In either configuration, the mounting flanges 32 and 34 facilitate alignment between the housings 22 and 14, and simplify alignment of the filter gasket 30 between seal interfaces on the mounting flanges 32 and 34.

The seal interfaces may include elongated grooves, rails, or other non-flat structures configured to self-retain the filter gasket 30, while also increasing compression of the filter gasket 30 between the first and second mounting flanges 32 and 34. As noted above, the filter gasket 30 may be self-retained and self-sealed to the first mounting flange 32, e.g., by an interference fit or compressive fit, into a groove 50 in the first mounting flange 32. Furthermore, the second mounting flange 34 may include a protrusion 52, such as an elongated rail or ridge, which extends into the groove 50 and interfaces with the filter gasket 30 at a recess 54. For example, during installation, the protrusion 52 may force (e.g., compress) the filter gasket 30 into the groove 50 in the direction 40, thereby causing the filter gasket 30 to more completely and tightly fill the groove 50 for an improved airtight seal. Simultaneously, the protrusion 52 may be surrounded by the filter gasket 30 in a non-flat manner, thereby increasing the blockage of air across the seal interface. The protrusion 52 also may result in a greater sealing force between the protrusion 52 and the filter gasket 30.

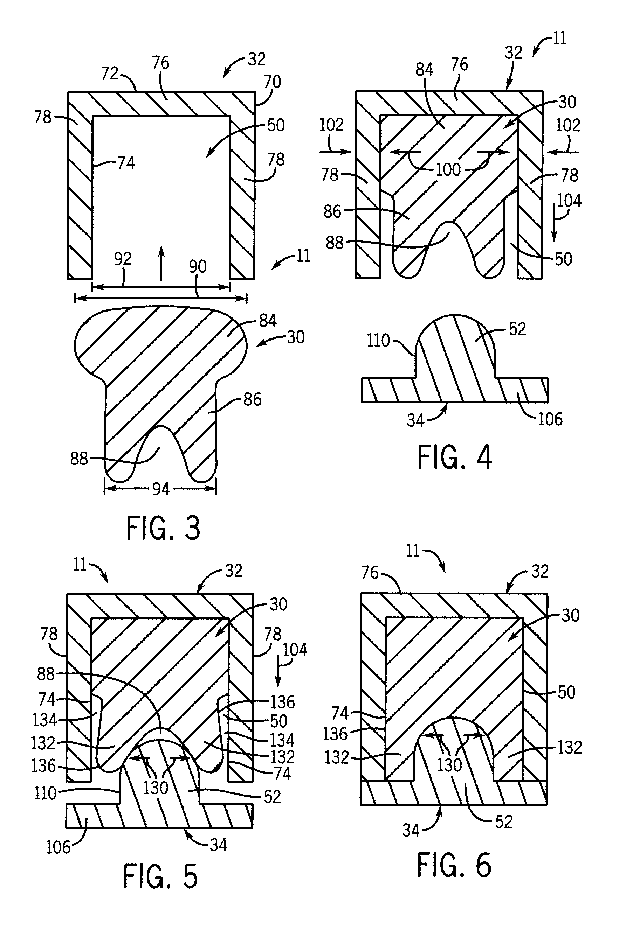

FIG. 3 is a cross-sectional view of an embodiment of the filter gasket 30 exploded from the first mounting flange 32 of the filter housing 22 of FIG. 2. As illustrated, the filter gasket 30 is being installed into the groove 50 in the first mounting flange 32, and the filter gasket 30 is at least partially oversized relative to the groove 50 to provide an interference fit and/or compression fit with the first mounting flange 32.

The first mounting flange 32 has a U-shaped structured 70 with an outer surface 72 and an inner surface 74. The U-shaped structure 70 is defined by a base 76 and opposite arms or sidewalls 78. The inner surface 74 defines the groove 50, which has a generally rectangular cross-section in the illustrated embodiment. However, the first mounting flange 32 and the groove 50 may have other cross-sectional shapes in other embodiments.

The gasket 30 defines a top portion 84 and a bottom portion 86. The illustrated top portion 84 is larger than the bottom portion 86, and the bottom portion 86 includes a recess 88. The top portion 84 may be described as a head, crown, or boss portion, whereas the bottom portion 86 may be described as a body, root, or leg portion. Thus, the gasket 30 also may be described as a tooth-shaped gasket. The top portion 84 may be spherical, semi-spherical, oval, rectangular, or another suitable shape configured to provide an interference fit and/or compression fit within the groove 50. For example, the top portion 84 may have a width 90 that is larger than a width 92 of the groove 50. In certain embodiments, the width 90 may be at least approximately 0.1 to 50, 0.1 to 25, 0.1 to 10, or 0.1 to 5 percent larger than the width 92. Furthermore, the width 90 of the top portion 84 may be larger than a width 94 of the bottom portion 86 by at least greater than approximately 5 to 100 or 10 to 50 percent. The recess 88 extends into the bottom portion 86, such that the protrusion 52 of the second mounting flange 34 can extend into and expand the bottom portion 86 within the groove 50. The illustrated recess 88 has a curved shape, e.g., a concave shape, to receive a convex shape of the protrusion 52. However, any suitable shapes may be used for the recess 88 and the protrusion 52. In certain embodiments, the bottom portion 86 may exclude the recess 88 and/or the gasket 30 may include internal voids distributed throughout the top portion 84 and the bottom portion 86. For example, the filter gasket 30 may be a high compression gasket made of high-density closed cell foam.

FIG. 4 is a cross-sectional view of an embodiment of the first mounting flange 32 of the filter housing 22 exploded from the second mounting flange 34 of the gas turbine intake 18 of FIG. 2, taken within dashed line 4-4, illustrating the filter gasket 30 self-retained in the first mounting flange 32. As illustrated, the top portion 84 and the bottom portion 86 of the filter gasket 30 are disposed in the groove 50 of the first mounting flange 84. The larger width 90 of the top portion 84 relative to the width 92 of the groove 50 causes the top portion 84 to compressively fit into the groove 50, thereby creating an interference fit or compression fit between the top portion 84 and the groove 50. As the top portion 84 is inserted into the groove 50, the sidewalls 78 of the first mounting flange 32 force the top portion 84 to compress inwardly and shrink in width until the widths 90 and 92 are equal to one another. However, the resiliency of the filter gasket 30 continues to exert an outward biasing force 100 (e.g., spring force) against the sidewalls 78 (e.g., opposite force 102) even after insertion into the groove 50. In this way, the top portion 84 serves to self-retain and self-seal the filter gasket 30 to the first mounting flange 30. The self-retention and self-seal features simplify the installation process, because the filter gasket 30 moves along with the first mounting flange 32 and thus the filter housing 22, of FIG. 2.

As further illustrated in FIG. 4, the first mounting flange 32 is being moved (e.g., lowered) in a direction 104 toward the second mounting flange 34 to compress the filter gasket 30 between the flanges 32 and 34. The second mounting flange 34 includes a base member 106 and the protrusion 52. The protrusion 52 may include a variety of shapes configured to interface with the recess 88 in the bottom portion 86 of the filter gasket 30. For example, the protrusion 52 may include a surface 110 having a curved shape, such as a convex or semi-circular protrusion. In the illustrated embodiment, the surface 110 is tapered toward the base member 106, such that the protrusion 52 gradually expands the bottom portion 86 of the filter gasket 30 while extending into the recess 88.

FIG. 5 is a cross-sectional view of an embodiment of the filter gasket 30 of FIG. 2 partially compressed between the first and second mounting flanges 32 and 34. As illustrated, as the first mounting flange 32 moves in the direction 104 toward the second mounting flange 34, the protrusion 52 extends into the recess 88 and gradually imparts an outward biasing force 130 against the bottom portion 86 toward the opposite sidewalls 78. As the motion continues in the direction 104, opposite sides 132 of the recess 88 (e.g., bottom portion 86) gradually slide along the exterior surface 110 of the protrusion 52 and expand in the direction 130. The gradual expansion of the sides 132, and thus the bottom portion 86, cause the sides 132 to approach the opposite sidewalls 78. In this manner, the interface between the recess 88 of the first mounting flange 32 and the protrusion 52 of the second mounting flange 34 gradually causes the bottom portion 86 of the filter gasket 30 to fill the empty space 134 within the groove 50. In other words, the sides 132 may begin to fill the empty space 134 between the interior surface 74 of the first mounting flange 32 and an exterior surface 136 of the bottom portion 86.

FIG. 6 is a cross-sectional view of an embodiment of the filter gasket 30 of FIG. 2 completely compressed between the first and second mounting flanges 32 and 34. As illustrated, the first mounting flange 32 is completely mounted on top of second mounting flange 34, such that the protrusion 52 is completely extended into the recess 88. In this position, the protrusion 52 biases the opposite sides 132 of the bottom portion 86 of the filter gasket 30 against the opposite sidewalls 78 of the first mounting flange 32, thereby causing the bottom portion 86 to completely occupy the space 134. In this manner, the bottom portion 86 of the filter gasket 30 imparts an outward biasing force (e.g., spring force) against both the opposite sidewalls 78 and the protrusion 52 due to the compression of the bottom portion 86. Thus, the compression of bottom portion 86 between the first and second flanges 30 and 32 creates an airtight seal between the filter housing 22 and the gas turbine housing 14. The protrusion 52 may also further compress the top portion 84 of the filter gasket 30 in the groove 50. For example, the protrusion 52 may bias the top portion 84 upwardly toward the base 76 and laterally toward the sidewalls 78 to improve the seal between the first and second mounting flanges 32 and 34.

In the disclosed embodiments, the filter gasket 30 may be used multiple times after connection and disconnection between the first and second mounting flanges 32 and 34. For example, as the filter housing 22 (and thus the first mounting flange 32) is lifted away from the gas turbine housing 14 (and thus the second mounting flange 34), the protrusion 52 gradually releases from the recess 88 in the bottom portion 86 of the filter gasket 30. The tapered shape (e.g., convex curve) of the protrusion 52 may facilitate this separation without damage to the filter gasket 30. The top portion 84 of the filter gasket 30 holds the filter gasket 30 into the groove 50 during this separation of the protrusion 52 from the recess 88. The opposite sides 132 of the bottom portion 86 gradually move inwardly toward the original shape of the recess 88. As a result, the filter gasket 30 may have substantially the same shape as shown in FIG. 4, such that the filter gasket 30 can be reused in a subsequently installation of the filter housing 22 with the gas turbine housing 14.

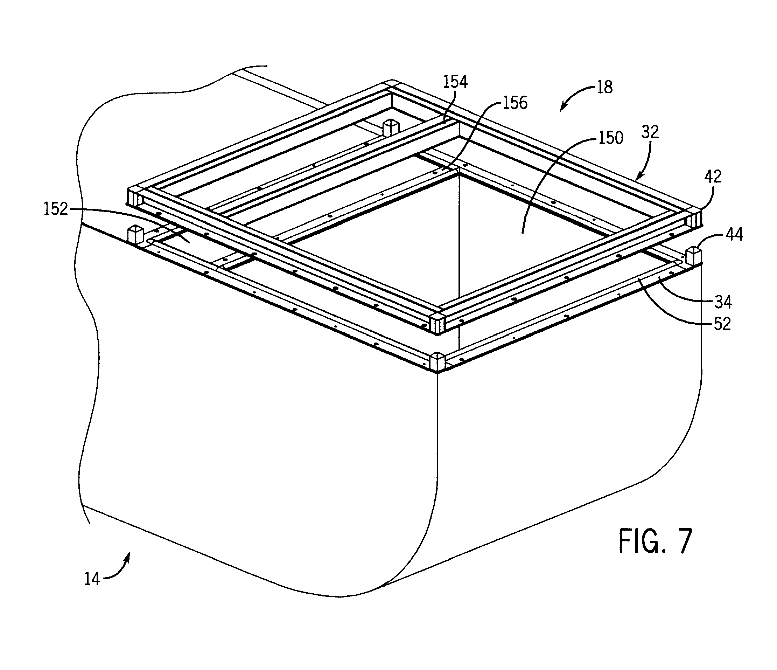

FIG. 7 is a partial perspective view of an embodiment of the gas turbine intake 18 of FIGS. 1 and 2, illustrating the first mounting flange 32 exploded from the second mounting flange 34. For simplicity, the filter housing 22 is not shown coupled to the first mounting flange 32. As illustrated, the first and second mounting flanges 32 and 34 are rectangular shaped flanges subdivided into a plurality of independent openings or passages. In other embodiments, the first and second mounting flanges 32 and 34 may have any suitable shape or number of openings. The illustrated flanges 32 and 34 are divided into two subsections by splines 154 and 156. These subsections correspond with a division in the air intake port 18. In the present embodiment, the air intake port 18 is divided into a combustion air intake 150 and a cooling air intake 152. As appreciated, a significant pressure differential may exist between the combustion air intake 150 and the cooling air intake 152. In the illustrated embodiment, the filter gasket 30 and the sealing features discussed above with reference to FIGS. 2 through 7 extend between the first and second mounting flanges 32 and 34, including the splines 154 and 156. In this manner, the filter gasket 30 may define two rectangular shaped seals, a first rectangular shaped seal about the combustion air intake 150 and a second rectangular shaped seal about the cooling air intake 152. The filter gasket 30 blocks airflow between the combustion air intake 150 (e.g., higher pressure) and the cooling air intake 152 (e.g., lower pressure).

As further illustrated in FIG. 7, the alignment openings 42 on the first mounting flange 32 are aligned with the alignment pins 44 on the second mounting flange 34 at the four corners of the flanges 32 and 34. As the first mounting flange 32 approaches the second mounting flange 34, the alignment pins 44 enter the alignment openings to guide the filter housing 22 onto the gas turbine housing 14 while ensuring a proper alignment of the filter gasket 30. Again, the filter gasket 30 is self-retained, self-aligned, and self-sealed to the first mounting flange 32, while the alignment features (e.g., openings 42 and pins 44) on the flanges 32 and 34 provide alignment between the bottom portion 86 of the filter gasket 30 and the protrusion 50 of the second mounting flange 34. In this manner, the installation procedure is substantially simplified by eliminating the need to manually hold and/or align the filter gasket 30 between the filter housing 22 and the gas turbine housing 14.

FIG. 8 is a perspective view of the second mounting flange 34. As illustrated, the second mounting flange 34 includes a frame 160 (e.g., rectangular frame) subdivided by the spline 156 into a first frame portion 162 and a second frame portion 164. The first frame portion 162 defines a first airflow opening or passage 166 (e.g., combustion air intake) and the second frame portion 164 defines a second airflow opening or passage 168 (e.g., cooling air intake). The filter gasket 30 provides an airtight seal about the first and second openings 166 and 168 between the first and second flanges 32 and 34.

In the illustrated embodiment, the second mounting flange 34 includes openings 170 and 172 distributed about the frame 160. The openings 170 are disposed at the four corners of the frame 160, whereas the openings 172 are distributed between the four corners. The openings 170 are configured to receive the alignment pins 44. For example, in the illustrated embodiment, the alignment pins 44 may be fixed to the gas turbine housing 14 rather than the second mounting flange 34. As the second mounting flange 34 is lowered onto the gas turbine housing 14, the alignment pins 44 extend into the openings 170 to align the frame 160 relative to the combustion air intake 150 and the cooling air intake 152 of the gas turbine housing 14. Once lowered onto the gas turbine housing 14, the second mounting frame 34 may be secured to the gas turbine housing 14 by extending bolts or other fasteners through the openings 172 into the gas turbine housing 14. In the illustrated embodiment, the number of openings 172 (and thus fasteners) may be substantially reduced due to the implementation of the openings 170 that align with the alignment pins 44. In other embodiments, the second mounting flange 34 may be integral with the gas turbine housing 14 and/or the alignment pins 44 may be integral with the second mounting flange 34.

FIG. 9 is a perspective view of the first mounting flange 32. As illustrated, the first mounting flange 32 includes a frame 174 (e.g., rectangular frame) subdivided by the spline 154 into a first frame portion 176 and a second frame portion 178. The first frame portion 176 defines a first airflow opening or passage 177 (e.g., combustion air intake) and the second frame portion 178 defines a second airflow opening or passage 179 (e.g., cooling air intake). The filter gasket 30 provides an airtight seal about the first and second openings 177 and 179 between the first and second flanges 32 and 34. As illustrated, the groove 50 extends about the entire frame 174, including the spline 154. In other words, the groove 50 includes a first rectangular groove portion disposed on the first frame portion 176 and a second rectangular groove portion disposed on the second frame portion 178. The filter gasket 30 fits within both the first and second rectangular groove portions 50 of the groove 50, thereby circumscribing both the first and second openings 177 and 179.

In the illustrated embodiment, the first mounting flange 32 includes openings 180 and 182 distributed in an alternating manner about the frame 174. The openings 180 are sized larger than and align with the bolts or fasteners that are inserted into the openings 172 of the second mounting flange 50. As the first mounting flange 32 is lowered onto the second mounting flange 34, the alignment pins 44 extend into the openings 42 to align the frame 174 relative to the combustion air intake 150 and the cooling air intake 152 of the gas turbine housing 14. As the openings 42 slide along the alignment pins 44 to guide the first mounting flange 32 toward the second mounting flange 34, the bolts or fasteners in the openings 172 become recessed into the openings 180. After completely lowering the first mounting flange 32 onto the second mounting flange 34, bolts or fasteners may be inserted through the openings 182 (and corresponding openings 172 in the second mounting flange 34) to secure the first mounting flange 32 to the second mounting flange 34. The first mounting flange 32 also may include openings and/or fasteners to secure the first mounting flange 32 to the filter housing 22. In other embodiments, the first mounting flange 32 may be integral with the filter housing 22, welded or brazed to the filter housing 22, or secured to the filter housing 22 in some other manner.

Technical effects of the invention include a self-retained and self-aligned reusable seal system 11 for sealing an interface between the filter housing 22 and the gas turbine housing 14. The reusable seal system 11 generally eliminates the need for manual alignment of a filter gasket between filter housing 22 and the gas turbine housing 14. Instead, the filter gasket 30 is self-retained, self-aligned, and self-sealed to the first mounting flange 32, which in turn is quickly and easily aligned and sealed to the second mounting flange 34. The alignment features (e.g., alignment openings 42 and alignment pins 44) guide the first and second mounting flanges 32 and 34 into alignment with one another, thereby simultaneously guiding the bottom portion 86 of the filter gasket 30 into alignment with the protrusion 52 along the second mounting flange 34. The filter gasket 30 is also reusable for multiple installations and removals, thereby reducing costs and time delays.

This written description uses examples to disclose the invention, including the best mode, and also to enable any person skilled in the art to practice the invention, including making and using any devices or systems and performing any incorporated methods. The patentable scope of the invention is defined by the claims, and may include other examples that occur to those skilled in the art. Such other examples are intended to be within the scope of the claims if they have structural elements that do not differ from the literal language of the claims, or if they include equivalent structural elements with insubstantial differences from the literal language of the claims.

For completeness, various aspects of the invention are now set out in the following numbered clauses:
1. A system, comprising:
   a power unit, comprising:
      a gas turbine engine;
      an air intake duct that routes air into the gas turbine engine;
      a filter housing that holds an air filter, wherein the filter housing is coupled to the air intake duct;
      a seal assembly disposed between the gas turbine intake and the filter, wherein the seal assembly comprises:
         a seal coupled to the air intake duct or the filter housing; and
         a filter alignment guide configured to align the seal between the air intake duct and the filter housing.
2. The system of clause 1, wherein the seal comprises a self-retention feature to couple the seal to the air intake duct or the filter housing.
3. The system of clause 2, wherein the seal assembly comprises a first mounting flange, and the self-retention feature of the seal comprises an interference fit with the first mounting flange.
4. The system of clause 3, wherein the interference fit of the seal comprises a compression fit of the seal within a cavity of the first mounting flange.
5. The system of clause 4, wherein the seal comprises an enlarged head compression fit into the cavity of the first mounting flange.
6. The system of clause 5, wherein the seal comprises a recess facing away from the cavity of the first mounting flange, and the seal assembly comprises a second mounting flange comprises a protrusion extending into the recess of the seal.
7. The system of clause 6, wherein the first mounting flange is coupled to the filter housing, the second mounting flange is coupled to the air intake duct, and the filter alignment guide is configured to align the first mounting flange relative to the second mounting flange.
8. The system of clause 1, wherein the power unit is mobile.
9. The system of clause 1, wherein the filter alignment guide comprises a plurality of alignment pins that mate with a corresponding plurality of pin receptacles.
10. A system, comprising:
   a turbine filter seal assembly, comprising:
      a first mounting flange comprises a channel extending about a first air opening;
      a seal comprising an enlarged portion compressed into the channel; and
      a second mounting flange comprising a protrusion extending about a second air opening, wherein the first and second mounting flanges are configured to couple to one another about the seal, and the protrusion is configured to bias the seal.
11. The system of clause 10, wherein the seal comprises a recessed groove facing away from the channel of the first mounting flange, and the protrusion is an elongated protrusion aligned with the recessed groove.
12. The system of clause 11, wherein the recessed groove comprises a concave groove, and the elongated protrusion comprises a convex protrusion.
13. The system of clause 11, wherein the elongated protrusion is sized larger than the recessed groove, and the elongated protrusion is configured to cause expansion of the seal upon insertion of the elongated protrusion into the recessed groove.
14. The system of clause 10, wherein the first and second air openings are aligned with one another to route combustion air to a gas turbine engine, and the first and second mounting flanges comprise respective third and fourth air openings to route cooling air to the gas turbine engine.
15. The system of clause 10, wherein the first mounting flange comprises a first alignment guide, the second mounting flange comprises a second alignment guide, and the first and second alignment guides mate with one another to align the seal between the first and second mounting flanges.
16. The system of clause 10, comprising a gas turbine engine, a turbine filter housing, a turbine intake duct, or a combination thereof, having the turbine filter seal assembly.
17. A system, comprising:
   a turbine filter seal assembly, comprising:
      a first mounting flange comprising a first cooling air opening, a first combustion air opening, and a first alignment guide;
      a second mounting flange comprising a second cooling air opening, a second combustion air opening, and a second alignment guide; and
      a seal disposed between the first and second mounting flanges, wherein the first and second alignment guides mate with one another to align the seal between the first and second mounting flanges.
18. The system of clause 17, wherein the first alignment guide comprises a plurality of alignment pins, and the second alignment guide comprises a plurality of pin receptacles.
19. The system of clause 17, wherein the seal is compressed within a channel along the first mounting flange.
20. The system of clause 19, wherein the second mounting flange comprises a protrusion that extends into the seal to cause expansion of the seal within the channel.

## Claims

1. A system, comprising:
a power unit (10), comprising:
a gas turbine engine (16);
an air intake duct (18) that routes air into the gas turbine engine (16);
a filter housing (22) that holds an air filter, wherein the filter housing (22) is coupled to the air intake duct (18);
a seal assembly (11) disposed between the gas turbine intake and the filter, wherein the seal assembly (11) comprises:
a seal (30) coupled to the air intake duct 18 or the filter housing (22); and
a filter alignment guide (36, 38) configured to align the seal (30) between the air intake duct (18) and the filter housing (22).

2. The system of claim 1, wherein the seal (30) comprises a self-retention feature (84) to couple the seal (30) to the air intake duct (18) or the filter housing (22).

3. The system of claim 2, wherein the seal assembly (11) comprises a first mounting flange (32), and the self-retention feature (84) of the seal (30) comprises an interference fit with the first mounting flange (32).

4. The system of claim 3, wherein the interference fit of the seal (30) comprises a compression fit of the seal (30) within a cavity (50) of the first mounting flange (32).

5. The system of claim 4, wherein the seal (30) comprises an enlarged head (84) compression fit into the cavity (50) of the first mounting flange (32).

6. The system of claim 5, wherein the seal (30) comprises a recess (88) facing away from the cavity (50) of the first mounting flange (32), and the seal assembly (11) comprises a second mounting flange (34) comprises a protrusion (52) extending into the recess (88) of the seal (30).

7. The system of claim 6, wherein the first mounting flange (32) is coupled to the filter housing (22), the second mounting flange (34) is coupled to the air intake duct (18), and the filter alignment guide (36, 38) is configured to align the first mounting flange (32) relative to the second mounting flange (34).

8. The system of claim 6, wherein the protrusion (52) is sized larger than the recess (88), and the elongated protrusion (52) is configured to cause expansion of the seal (30) upon insertion of the protrusion (52) into the recess (88).

9. The system of any of the preceding claims, wherein the power unit is mobile (12).

10. The system of any of the preceding claims, wherein the filter alignment guide (38) comprises a plurality of alignment pins (44) that mate with a corresponding plurality of pin receptacles (42).
